Europäisches Patentamt

European Patent Office

Office européen des brevets

(11) Veröffentlichungsnummer: **0 350 896**
**A1**

## (12) EUROPÄISCHE PATENTANMELDUNG

(21) Anmeldenummer: **89112764.9**

(22) Anmeldetag: **12.07.89**

(51) Int. Cl.⁴: **B60H 1/00**

(30) Priorität: **13.07.88 DE 8809007 U**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **Karl Kässbohrer Fahrzeugwerke GmbH**
**Kässbohrerstrasse 13 Postfach 2660**
**D-7900 Ulm (Donau)(DE)**

(72) Erfinder: **Hagen, Hans, Dr.-Ing.**
**Adalbertstrasse 10**
**D-8000 München 40(DE)**

(74) Vertreter: **Patentanwälte Grünecker,**
**Kinkeldey, Stockmair & Partner**
**Maximilianstrasse 58**
**D-8000 München 22(DE)**

(54) **Fahrzeug mit temperierten Innenflächen.**

(57) Das Fahrzeug verfügt über eine Heizung, die einen an einem Fluidheizkreislauf angeschlossenen Wärmetauscher aufweist. Um die Heizung für den Fahrgast angenehmer zu gestalten ist vorgesehen, daß der Wärmetauscher als Strahlungs- und/oder Konvektionsheizer in Form wenigstens eines Flächenelementes ausgebildet ist.

Auf diese Art und Weise besteht die Möglichkeit auch bei größeren Fahrzeugen die Temperatur eines jeden Fahrgastplatzes individuell zu regeln.

FIG.1

## Fahrzeug mit temperierten Innenflächen

Die Erfindung betrifft ein Fahrzeug, insbesondere einen Omnibus, mit einer Heizung, die einen an einen Fluid-Heizkreislauf angeschlossenen Wärmetauscher aufweist.

Bei den bisher bekannten Fahrzeugheizungen sind Wärmetauscher vor oder hinter Ventilatoren angeordnet und an den Motor-Kühlwasserkreislauf angeschlossen. Mittels der Ventilatoren oder infolge der Bewegung des Fahrzeuges wird Luft von außerhalb desselben (Frischluft) oder auch von innerhalb des Fahrzeuges (Umluft) oder eine Mischung von Luft von außerhalb oder innerhalb des Fahrzeuges dem Wärmetauscher zugeführt, durch diesen aufgeheizt und sodann in den Fahrgastraum eingeblasen. Um die vergleichsweise großen erforderlichen Wärmemengen zu transportieren und den Fahrgastraum aufzuheizen und die gewünschte Temperatur konstant zu halten, ist es notwendig, große Luftvolumen vom Wärmetauscher aus mit relativ hoher Geschwindigkeit und hoher Temperatur in den Fahrgastraum einzublasen. Bei dieser Art der Heizung durch erzwungene Konvektion lassen sich laute Laufgeräusche der Ventilatoren und Geruchsbelästigungen durch beispielsweise Staubverbrennung nicht vermeiden. Durch die geringe Anzahl der Wärmetauscher-Ventilatoreinheiten besteht außerdem keine Möglichkeit, in verschiedenen Bereichen des Fahrgastraumes individuelle Temperaturen einzustellen.

Dementsprechend ist es Aufgabe der Erfindung, ein Fahrzeug der eingangs genannten Art mit einer für die Fahrgäste angenehmeren Heizung zu schaffen.

Dies wird erfindungsgemäß dadurch erreicht, daß der Wärmetauscher als Strahlungs- und/oder Konvektionsheizer im Fahrgastraum in Form wenigstens eines Flächenelementes ausgebildet ist.

Anstelle der bisher verwendeten erzwungenen Konvektion mittels der in den Fahrgastraum eingeblasenen Luft erfolgt die Aufheizung des Fahrgastraumes nunmehr durch vom Flächenelement ausgehende Wärmestrahlung, begleitet von freier Konvektion der vom Flächenelement abgegebenen Wärme an die Luft im Fahrgastraum. Die erfindungsgemäße Heizung ist frei von unangenehm hohen Luftgeschwindigkeiten und arbeitet mit einem niedrigen Temperaturniveau, wodurch Geruchsbelästigungen durch Staubverbrennung verhindert werden. Außerdem ist die erfindungsgemäße Heizung träge und hält die Temperatur auch bei stillstehendem Fahrzeug über einen längeren Zeitraum auf dem gewünschten Niveau. Entsprechend der Anzahl der verwendeten Flächenelemente und deren Verteilung im Fahrgastraum kann in verschiedenen Bereichen desselben die Temperatur an die individullen Bedürfnisse der Fahrgäste angepaßt werden. Eine Lärmbelästigung durch laute Gebläse entfällt.

Vorzugsweise ist das Flächenelement als zumindest Teil der Seitenwand- und/oder Dach- und/oder Bodenverkleidung ausgebildet. Bei Fahrzeugen mit aus einzelnen Verkleidungselementen bestehender Verkleidung ist es besonders günstig, das Flächenelement als Verkleidungselement auszubilden bzw. in dieses zu integrieren.

Dabei kann das Flächenelement doppelwandig zur Aufnahme des Heizfluids, beispielsweise Kühlwasser oder ein anderes Fluid hoher Wärmekapazität, ausgebildet sein. Um die Wirksamkeit der Heizung zu erhöhen, weist die fahrzeugäußere Wand des Flächenelementes vorzugsweise eine im Vergleich zu dessen fahrzeug inneren Wand hohe Wärmeisolation auf.

Gemäß einer Weiterbildung der Erfindung ist wenigstens eine Leitung zur Führung des Heizfluids zwischen den Wänden des Flächenelementes angeordnet. Um die Wärmeleitung zu verbessern, ist es günstig, die Leitung als an der fahrzeuginneren Wand des Flächenelementes anliegende Kontaktleitung auszubilden. Die fahrzeuginnere Wand des Flächenelementes kann als Teil der Leitung ausgebildet sein.

Vorteilhafterweise weist die Leitung einen kleinen Querschnitt auf (geringe Mengen des Heizfluids, geringes Gewicht). Sie kann schlangenförmig oder in ähnlicher Form gleichmäßig über das Flächenelement verteilt sein. Bei Verwendung mehrerer Flächenelemente ist es zweckmäßig, deren leitungen in Parallelschaltung an eine Versorgungsleitung anzuschließen. Diese Versorgungsleitung kann entweder direkt oder über einen Wasser/Wasser-Wärmetauscher oder über einen Wasser/Öl-Wärmetauscher an den Motor-Kühlwasserkreislauf angeschlossen sein.

Selbstverständlich ist es auch möglich, einen getrennten Fluid-Heizkreislauf zu verwenden.

Nachstehend ist die Erfindung anhand eines Ausführungsbeispiels unter Bezugnahme auf die Zeichnung näher beschrieben. Es zeigen:

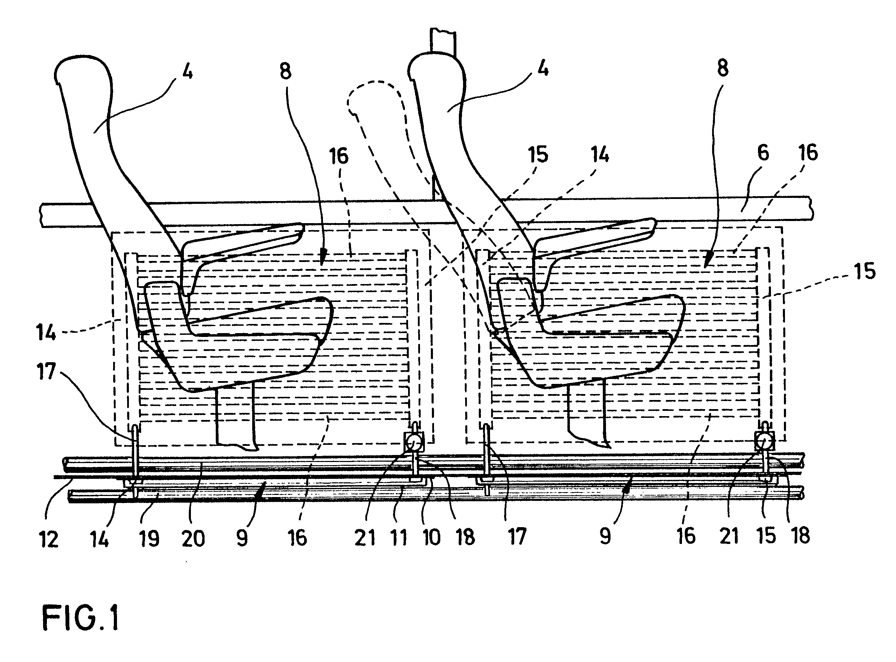

Fig.1 eine Seitenansicht eines Teils eines Omnibusses als Ausführungsbeispiel des erfindungsgemäßen Fahrzeuges mit einer Doppelsitzreihe und dieser zugeordneter Heizung, und

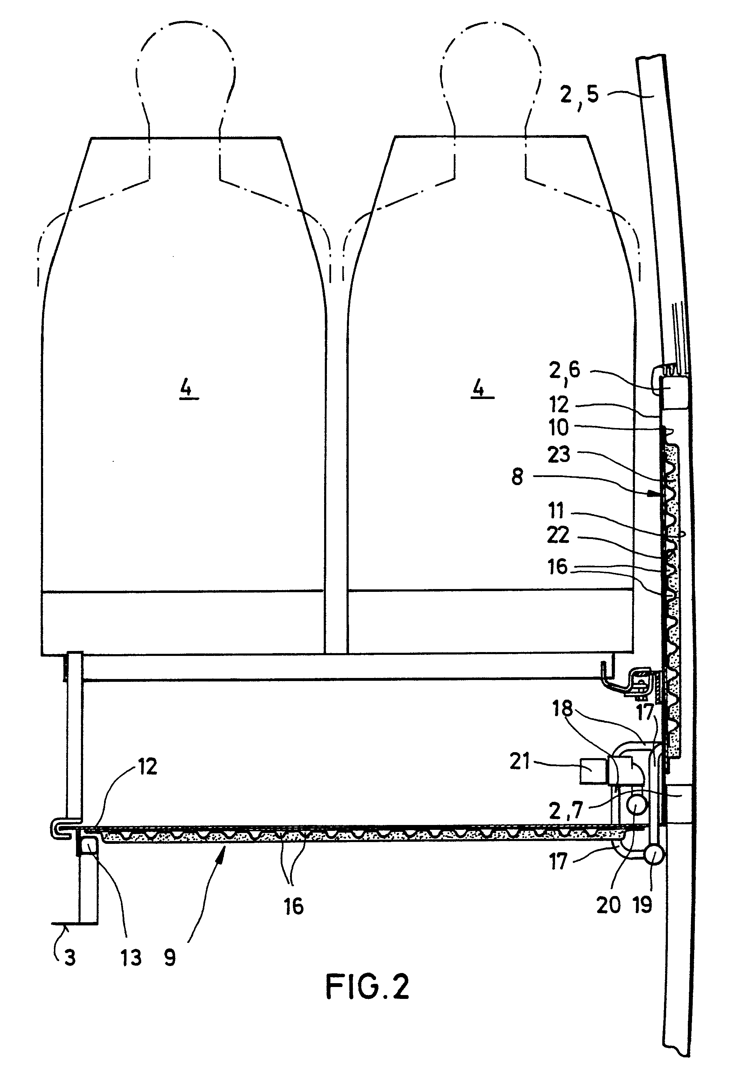

Fig.2 eine verkleinerte Rückansicht der Doppelsitzreihe nach Fig. 1 mit im Schnitt dargestellter Heizung.

Das als Omnibus ausgebildete erfindungsgemäße Fahrzeug ist durch eine Seitenwand 2, einen Laufgang 3 und zwei in Fahrzeuglängsrichtung hintereinander angeordnete Doppelsitze 4 schematisch dargestellt. Die Seitenwand 2 umfaßt ein Fenster 5 sowie einen unterhalb desselben angeordneten oberen Längsträger 6 und einen etwa in Höhe des Laufganges 3 angeordneten unteren Längsträger 7.

Jedem Doppelsitz 4 ist eine Heizung bestehend aus zwei Wärmetauschern in Form je eines doppelwandigen Flächenelementes 8, 9 mit einer fahrzeuginneren Wand 10 und einer fahrzeugäußeren Wand 11 zugeordnet. Jedes Flächenelement 8, 9 stellt einen Strahlungs- und Konvektionsheizer dar. Das Flächenelement 8 ist als seitliches Flächenelement in der Seitenwand 2 in Höhe des Doppelsitzes 4 und das Flächenelement 9 als unteres Flächenelement unterhalb des Doppelsitzes 4 angeordnet. Jedes Flächenelement 8, 9 ist mit seiner fahrzeuginneren Wand 10 an einer Verkleidung 12 befestigt. Im Falle des seitlichen Flächenelementes 8 ist diese Verkleidung 12 am unteren und am oberen Längsträger 6, 7 und im Falle des unteren Flächenelementes 9 am unteren Längsträger 7 und einem weiterem Längsträger 13 nahe dem Laufgang 3 befestigt. Auf diese Weise sind beide Flächenelemente 8, 9 als Teil der Seitenwand- und Bodenverkleidung ausgebildet bzw. in dieselbe integriert.

Zwischen der fahrzeuginneren Wand 10 und der fahrzeugäußeren Wand 11 jedes Flächenelementes 8, 9 sind im wesentlichen horizontal und parallel zueinander zwischen zwei vertikalen Sammelleitungen 14, 15 verlaufende Leitungen 16 für das Heizfluid angeordnet. Die Flächenelemente 8, 9 sämtlicher Doppelsitze sind über ihre jeweiligen Sammelleitungen 14, 15 und an diese jeweis angeschlossenen Anschlußleitungen 17, 18 in Parallelschaltung an zwei Versorgungsleitungen, nämlich eine Rücklaufleitung 19 und eine Vorlaufleitung 20, angeschlossen. Zwischen der Vorlaufleitung 20 und den zu den Sammelleitungen 15 jedes Flächenelementes 8, 9 führenden Anschlußleitungen 18 ist je ein Regelelement 21 eingesetzt. Beide Versorgungsleitungen 19, 20 sind an einen nicht dargestellten Motor-Kühlwasserkreislauf angeschlossen.

An der fahrzeuginneren Wand 10 jedes Flächenelementes 8, 9 ist ein gerilltes Blech 22 befestigt, dessen Rillen zusammen mit der fahrzeuginneren Wand 10 die Leitungen 16 für das Heizfluid bilden. Zwischen dem gerilltem Blech 22 und der fahrzeugäußeren Wand 11 jedes Flächenelementes 8, 9 ist eine wärmeisolierende Schicht 23 angebracht.

Das vom Motor aufgeheizte Kühlwasser wird über die Vorlaufleitung 20, dem jeweiligen Regelement 21 und den angeschlossenen Anschlußleitungen 18 den jedem Doppelsitz 4 zugeordneten Flächenelementen 8, 9 zugeführt und über die Anschlußleitungen 17 zur Rücklaufleitung 19 und damit zum Motor-Kühlwasserkreislauf zurückgeführt.

Durch entsprechende Einstellung des jeweiligen Regelelementes 21 kann für jeden Doppelsitz 4 die jeweils gewünschte Temperatur der Flächenelemente 8, 9 individuell eingestellt werden. Die entsprechend aufgeheizten Flächenelemente 8, 9 geben ihre Wärme durch Strahlung und Konvektion nach innen bzw. nach oben (infolge der durch die wärmeisolierende Schicht 23 bedingten hohen Wärmeisolation der fahrzeugäußeren Wand 11) an die zugeordneten Doppelsitze 4 ab. Das Temperaturniveau ist im Vergleich zur herkömmlichen Heizung relativ niedrig, so daß keine Geruchsbelästigung durch Staubverbrennung auftritt. Ventilatoren sind nicht erforderlich, so daß keine unangenehm hohen Luftgeschwindigkeiten und keine Lärmbelästigungen auftreten. Die Heizung durch die Flächenelemente 8, 9 ist vergleichweise träge, so daß die Temperatur auch bei stillstehendem Fahrzeug über einen längeren Zeitraum auf dem gewünschten Niveau gehalten wird. Angesichts dieser Trägheit können jedoch Ventilatoren vergleichsweise geringer Leistung, die keine Lärmbelästigungen und unangenehm hohe Luftgeschwindigkeiten erzeugen, verwendet werden, um den Fahrzgastraum bei Einsatzbedingungen mit sehr niedrigen Außentemperaturen beschleunigt aufheizen zu können.

Es ist auch denkbar, die erfindungsgemäße Heizung zusammen mit herkömmlichen Heizungen zu verwenden.

Die erfindungsgemäße Heizung bietet insbesondere bei Omnibussen Vorteile. Bei solchen Fahrzeugen ist es bekannt die Temperatur des Fahrgastraumes insgesamt zu regeln. Die Erfindung ermöglicht jetzt eine Individualisierung der Heizung beziehungsweise Kühlung, indem je nach Wunsch jeder Fahrgastplatz beziehungsweise Gruppen von se Gruppen von Fahrgastplätzen, z.B. Sitzreihen getrennt voneinander geheizt, bzw. gekühlt werden können. Ein langer Omnibusinnenraum kann beispielsweise in einen vorderen, wärmeren Bereich und in einen hinteren, kühleren Bereich geteilt werden. Hierzu werden je ein Raumluftfühler benötigt. Desweiteren ist es denkbar, den Omnibusinnenraum in einen Bereich links vom Mittelgang und in einen solchen rechts vom Mittelgang zu trennen und wiederum diese beiden Bereiche unterschiedlich zu heizen bzw. zu kühlen. Eine zusätzliche Feinsteuerung links/rechts kann über Verdampfer erfolgen, in denen am Lufteintritt ein Fühler vorgeschaltet ist. Auf diese Weise kann z.B. einer stärkeren Erwärmung der einen Fahrzeugseite durch seitliche Sonneneinstrahlung entgegengewirkt werden.

## Ansprüche

1. Fahrzeug mit Heizung, die einen an einen Fluid-Heizkreislauf angeschlossenen Wärmetauscher aufweist, **dadurch gekennzeichnet,** daß der Wärmetauscher als Strahlungs- und/oder Konvektionsheizer im Fahrgastraum in Form wenigstens eines Flächenelementes (8, 9) ausgebildet ist.

2. Fahrzeug nach Anspruch 1, **dadurch gekennzeichnet,** daß das Flächenelement als zumindest Teil der Seitenwand-und/oder Dach- und/oder Bodenverkleidung (12) ausgebildet ist.

3. Fahrzeug nach Anspruch 1 oder 2 mit aus einzelnen Verkleidungselementen bestehender Verkleidung, **dadurch gekennzeichnet,** daß das Flächenelement als Verkleidungselement ausgebildet ist.

4. Fahrzeug nach wenigstens einem der vorhergehenden Ansprüche, **dadurch gekennzeichnet,** daß das Flächenelement (8, 9) doppelwandig zur Aufnahme des Heizfluids ausgebildet ist.

5. Fahrzeug nach Anspruch 4, **dadurch gekennzeichnet,** daß die fahrzeugäußere Wand (11) des Flächenelementes (8, 9) eine im Vergleich zu dessen fahrzeuginneren Wand (10) hohe Wärmeisolation aufweist.

6. Fahrzeug nach Anspruch 4 oder 5, **dadurch gekennzeichnet,** daß wenigstens eine Leitung (16) zur Führung des Heizfluids zwischen den Wänden (10, 11) des Flächenelements (8, 9) angeordnet ist.

7. Fahrzeug nach Anspruch 6, **dadurch gekennzeichnet,** daß die Leitung als an der fahrzeuginneren Wand des Flächenelements anliegende Kontaktleitung ausgebildet ist.

8. Fahrzeug nach wenigstens einem der Ansprüche 6 bis 7, **dadurch gekennzeichnet,** daß die Leitung an die fahrzeuginnere Wand des Flächenelements angegossen ist.

9. Fahrzeug nach wenigstens einem der Ansprüche 6 bis 8, **dadurch gekennzeichnet,** daß die fahrzeuginnere Wand (10) des Flächenelements (8, 9) als Teil der Leitung (16) ausgebildet ist.

10. Fahrzeug nach wenigstens einem der Ansprüche 6 bis 9, **dadurch gekennzeichnet,** daß die Leitung (16) schlangenförmig, leiterförmig oder dgl. gleichmäßig über das Flächenelement (8, 9) verteilt ist.

11. Fahrzeug nach wenigstens einem der Ansprüche 6 bis 10, **dadurch gekennzeichnet,** daß die Leitungen (16) mehrerer Flächenelemente (8, 9) in Parallelschaltung an Versorgungsleitungen (19, 20) angeschlossen sind.

12. Fahrzeug nach Anspruch 11, **dadurch gekennzeichnet,** daß die Versorgungsleitungen (19, 20) direkt an den Motor-Kühlwasserkreislauf angeschlossen sind.

13. Fahrzeug nach Anspruch 11 oder 12, **dadurch gekennzeichnet,** daß die Versorgungsleitungen über einen Wasser/Wasser-Wärmeaustauscher an den Motor-Kühlwasserkreislauf angeschlossen sind.

14. Fahrzeug nach wenigstens einem der vorhergehenden Ansprüche, **gekennzeichnet durch** Wassermischung zur Erzielung einer günstigen Vorlauftemperatur des Heizfluids.

15. Fahrzeug nach wenigstens einem der vorhergehenden Ansprüche mit mehrfach angeordneten Wärmetauschern, **dadurch gekennzeichnet** daß jeder Wärmetauscher (Flächenelement 8,9) einzeln oder in der Gruppe mit anderen Wärmetauschern einstell- und bedienbar ist.

FIG.1

EP 0 350 896 A1

FIG.2

Europäisches Patentamt

**EUROPÄISCHER RECHERCHENBERICHT**

Nummer der Anmeldung

EP 89 11 2764

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 002 628 (DAIMLER-BENZ AG) * Insgesamt * | 1-6,9 | B 60 H 1/00 |
| Y | | 10,14, 15 | |
| | --- | | |
| X | DE-A-3 218 710 (DAIMLER-BENZ AG) * Insgesamt * | 1,2,11, 13 | |
| | --- | | |
| X | DE-U-8 420 082 (FR. BEHR GmbH) * Seiten 5,7 * | 1-7,9, 11,12 | |
| | --- | | |
| X | FR-A-2 063 434 (ASCHER) * Figur 5 * | 1 | |
| | --- | | |
| Y | US-A-2 483 721 (C. BECKER) * Insgesamt * | 10 | |
| | --- | | |
| Y | US-A-1 934 193 (L. HYNES) * Anspruch 1 * | 14 | |
| | --- | | |
| Y | US-A-2 323 236 (P. PARKS) * Seite 1, linke Spalte, Zeilen 22-28 * | 15 | RECHERCHIERTE SACHGEBIETE (Int. Cl.5) |
| | ----- | | B 60 H 1/00 B 61 D 27/00 |

Der vorliegende Recherchenbericht wurde für alle Patentansprüche erstellt

| Recherchenort | Abschlußdatum der Recherche | Prüfer |
|---|---|---|
| DEN HAAG | 09-10-1989 | BOLJANAC T. |